# EUROPEAN PATENT APPLICATION

(11) **EP 2 131 320 A1**
(43) Date of publication of application: **09.12.2009**
(21) Application number: 08157214.1
(22) Date of filing: 29.05.2008
(51) Int. Cl.: G06Q 50/00

(54) **Method and system for collecting and processing carbon credits**

(71) Applicant: Nederlandse Organisatie voor toegepast-natuurwetenschappelijk onderzoek TNO, 2628 VK Delft (NL)
(72) Inventor: The designation of the inventor has not yet been filed
(74) Representative: Hatzmann, Martin

(57) **Abstract**

Method for large scale collecting and processing energy related data of large numbers of energy producing and/or energy consuming entities, called energy entities (1). Each relevant energy entity comprises an energy monitor (2), including detection means for detecting the energy production or consumption of the energy entity, a processing module for producing energy related data, and a transmission module for transmitting the energy data via a wireless transmission path (3). The energy data from all energy entities is input into a data processing system (4). Each energy monitor may be provided with a monitor identifier to be transmitted along with the energy data to the data processing system which has all monitor identifiers and energy related parameters of the energy entities, using them to calculate amounts of energy units, corresponding to the energy produced or consumed by the different energy entities. When providing the data processing system with user address data, the system will be able to output to each user address an amount of e.g. carbon credits, reflecting the amount of clean energy units calculated for the relevant energy entity. Preferred clean energy entities comprise photovoltaic, wind, hydropower, biogas and solar powered systems. The wireless transmission path preferably comprises some form of a wireless ad hoc network on the side of the energy entities, including a so-called mobile ad hoc network, wireless mesh network or wireless sensor network, the relevant transmission modules of said energy monitors of the energy entities being arranged to function as nodes of said wireless ad hoc network. The wireless ad hoc network may be connected to the data processing system via a wireless or wired public communication network.

## Description

The invention refers to a method for large scale collecting and processing energy related data of large numbers of energy producing and/or energy consuming entities, called energy entities hereinafter. In particular, the method is pointed - however certainly not excluded - to the use of carbon credits or other rewarding or credit notes in any form, reflecting the amount of energy used or produced by each relevant energy entity, particular by entities which do not consume carbon based energy sources.

Carbon credits are a key component of national and international emissions trading schemes that have been implemented to mitigate global warming. They provide a way to reduce greenhouse effect emissions on an industrial scale by capping total annual emissions and letting the market assign a monetary value to any shortfall through trading. Credits can be exchanged between businesses or bought and sold in international markets at the prevailing market price. Credits can be used to finance carbon reduction schemes between trading partners and around the world. There are also many companies that sell carbon credits to commercial and individual customers who are interested in lowering their carbon footprint on a voluntary basis. These "carbon offsetters" purchase the credits from an investment fund or a carbon development company that has aggregated the credits from individual projects. The quality of the credits is based in part on the validation process and sophistication of the fund or development company that acted as the sponsor to the carbon project. This is reflected in their price; voluntary units typically have less value than the units sold through the rigorously-validated Clean Development Mechanism (CDM) that can be officially accounted in the green house gas registers of the Kyoto Partners.

The credits generated by Clean Development Mechanism (CDM) projects on energy projects are created by using the renewable energy technologies thereby creating emission reductions and carbon credits. For transparency and accountability the usage of the technologies has to be monitored. For large scale industrial processes, monitoring systems can be automated, but for small scale CDM projects this monitoring is often done by manually keeping books. For example the usage of biogas plants in households in rural areas can be recorded by keeping record by the families on when and for how long the installation is used each day in cooking.

The records are collected and manually typed into a database. Those small scale CDM projects often depend also on a relatively large number of individual installations. Projects on biogas units often consist out of several thousands (5,000 to 30,000 or more) and projects based on PV (Photo Voltaic) lighting are even using bigger numbers. The monitoring requirement therefore limits these small scale CDM projects to areas where such a monitoring systems can be set up and were the results can be processed.

At the moment large projects on renewable energy are under consideration, for example a project of TERI (Tata Energy Research Institute) called "Light up a Billion Lives", in which 200,000,000 families in India are being supplied with PV lanterns. This dilemma of small scale CDM projects becoming large scale social and organizational undertakings can be solved by somehow automating the monitoring also for small scale CDM projects.

According to the invention a method for large scale collecting and processing energy related data of large numbers of energy producing and/or energy consuming entities, called energy entities hereinafter, is proposed, preferably comprising the steps of:
- providing each relevant energy entity with an energy monitor, including detection means arranged to detect the energy production or consumption respectively of the relevant energy entity, a processing module arranged to produce data related to the produced or consumed energy respectively, called energy data hereinafter, and a transmission module arranged to transmit the energy data via a wireless transmission path;
- collecting said energy data from all relevant energy entities and inputting them into a data processing system.

In this way each relevant energy entity having an energy monitor, with detection means for detection of the energy production or consumption of the energy entity, a processing module to generate the energy related data (energy data) and a transmission module, the energy data can be collected from all relevant energy entities and can be input into a data processing system.

It will be preferred to break down the use or production of carbon/non-carbon energy to the various energy entities or groups of energy entities, in order to be able to monitor the contribution of those groups or individual energy entities to the use of dirty, i.e. greenhouse gases emitting, or clean energy resources. For that reason it is preferred, that the method as outlined above further comprises the steps of:
- providing each energy monitor with means for storing a monitor identifier assigned to it and for, during use, transmitting that identifier along with said energy data to the data processing system;
- providing the data processing system with all relevant monitor identifiers and energy related parameters of the relevant energy entities; and
- calculating, in the data processing system, from the energy data and monitor identifiers received from the energy entities via the wireless transmission path, amounts of energy related units, called energy units hereinafter, corresponding to the energy produced or consumed by the different energy entities.

It is preferred that the users/proprietors of the energy entities like lights, furnaces, pumps, but also (potential) energy and carbon credit generators like forestation and reforestation project (planting trees), biomass units, etc. will individually be rewarded when using preferred (i.e. carbon free) energy sources or when producing such energy, by means of receiving incentives, e.g. in the form of bonuses, credits, money, etc. In order to individualize the system - in order to be able to reward individually - it is preferred that the method as outlined above further comprises the steps of:
- providing the data processing system with user or proprietor related data, called user address hereinafter, of each energy entity;
- outputting and transferring to each user address, an amount of rewarding or credit notes in any form, reflecting the amount of energy units calculated for the relevant energy entity.
Said energy units may be or may be related to carbon credits as they are called nowadays.

In this way, as outlined so far, individuals or groups, can be confronted with their energy usage behaviour and be rewarded (or charged) accordingly.

In this way it is aimed to stimulate "clean" energy entities which cause minimum greenhouse gases. Such clean energy entities include photovoltaic means, wind driven and hydropower driven apparatuses, biogas generators, solar cookers, however, trees ((re)forestation programs), biogas masses as well.

In a system is arranged to perform the method according to the invention, it is preferred that the wireless transmission path comprises some form of a wireless ad hoc network on the side of the energy entities, which may include a so-called mobile ad hoc network, a wireless mesh network or a wireless sensor network. Such networks are decentralized wireless networks which are called "ad hoc" because the network is self-configuring and forms and arbitrary topology based upon the quality of the wireless transmission paths. Each node is willing to forward data for other nodes, and so the determination of which nodes forward data is made dynamically based on the network connectivity. It is also in contrast to managed wireless networks, in which a special node known as an access point manages communication among other nodes. The decentralized nature of wireless ad hoc networks makes them suitable for a variety of applications where central nodes cannot be relied on or are not present, and may improve the scalability of wireless ad hoc networks compared to wireless managed networks. Minimal configuration and quick deployment make ad hoc networks suitable for areas having a poor telecommunication infrastructure, as e.g. in developing countries. As stated before, wireless ad hoc networks can be further classified by their application, i.e. include mobile ad hoc networks, wireless mesh networks and wireless sensor networks. In the preferred system for performing the method according to the invention the transmission modules of the energy monitors of the energy entities preferably are arranged to function as nodes of such a wireless ad hoc network, mobile ad hoc network, wireless mesh network or wireless sensor network.

In such preferred system the wireless ad hoc network, mobile ad hoc network, wireless mesh network or wireless sensor network, may be connected to the data processing system via a wireless or wired public communication network.

Currently there is a lot of effort in the development of wireless mesh technologies but most of it seems still in an experimental stage and the radius varies. A wireless mesh is a dynamic open network system generated by several separate individual wireless nodes. An example of a wireless mesh application is for example the "One Laptop per Child" project. This project develops a laptop for use by children in developing countries using a wireless mesh network topology which makes it possible for a whole group of laptops to connect to each other and to finally connect to one fixed network or internet connection somewhere in that wireless mesh. In this way the Internet can be distributed throughout a vast remote area where no IT infrastructure is whatsoever. Wireless mesh networking is cheap. In the same way it is useful for connecting all relevant energy monitors with the (central of distributed) energy data processing system.

The present invention will further be explained below with reference to the drawing, in which:
- Figure 1: schematically shows an exemplary embodiment of a system capable of performing the method according to the invention;
- Figure 2: schematically shows an exemplary embodiment of an energy monitor used in the method according to the invention

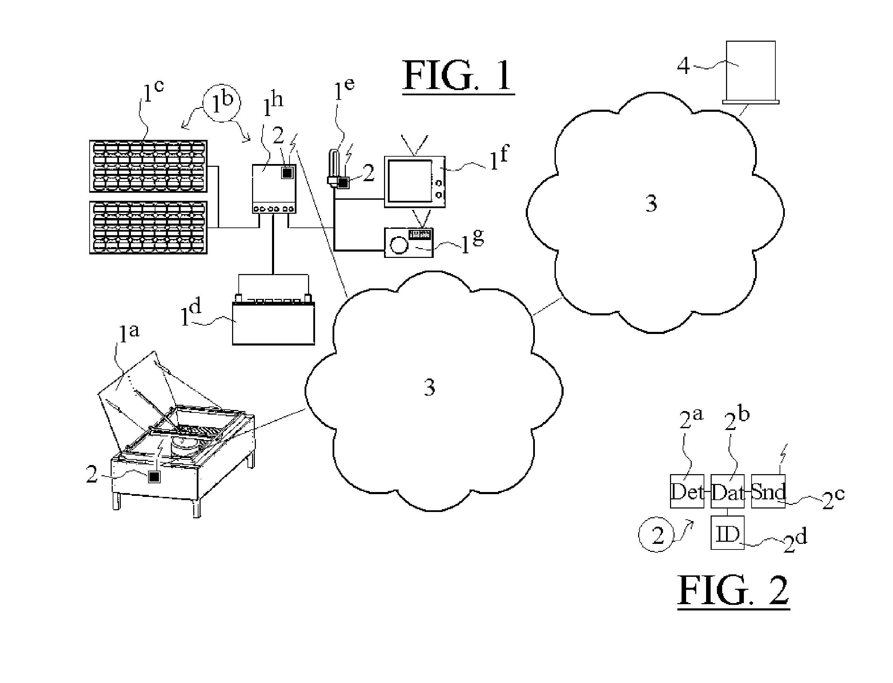

Figure 1 shows a system for large scale collecting and processing energy related data of large numbers of energy producing and/or energy consuming entities, called energy entities hereinafter. Such entities are indicated in figure 1 by a solar cooker 1a and a domestic photovoltaic (PV) set 1b, including a PV electricity generating module (solar panel) 1c, a battery 1d, lamps 1e, a TV set If and a radio 1g, as well as a control unit 1h.

Each energy entity 1 (a, b, c, etc.) or part of them is provided with an energy monitor 2 which includes a module 2a for detection (Det) the energy production or consumption respectively of the relevant energy entity, a processing module 2b for producing data (Dat) related to the produced or consumed energy, called energy data hereinafter, and a transmission module 2c for transmitting (Send) the energy data via a wireless transmission path, which is enabled by a some form of wireless ad hoc network 3a which, on its turn, is connected - via a not explicitly shown gateway - to a public telephone/data network 3b. The energy data from all relevant energy entities 1 are sent to a data processing system (e.g. a data processing server) 4, where they are processed.

To be able to monitor the contribution of the energy entities 1 to the use of dirty or clean energy respectively each energy monitor 2 with a memory for storing a monitor identifier (ID) assigned to it and for, during use, transmitting that identifier (ID) along with said energy data (Dat) to the data processing system. To be able to process all energy data accordingly, the data processing system 4 must be filled with all relevant monitor identifiers and energy related parameters of the relevant energy entities. For example the ID and relevant parameters of each energy entity are registered by the manufacturer, the wholesaler, the retailer or the buyer/proprietor or end user of the energy entity, in same way guarantee cards etc. are registered and processed. In this way the data processing system is able to process, from the energy data and monitor identifiers received from the energy entities, amounts of energy related units, energy units, corresponding to the energy produced or consumed by the different energy entities, e.g. broken down by class of energy entity etc.

To stimulate users to use clean energy sources the users can individually be rewarded by giving them bonuses, credits, money, etc. In order to be able to distribute such rewards the data processing system has also be provided with the user addresses (including e.g. name, postal address, bank or carbon credit account etc.), which could be linked to the monitor ID and which can be registered in the same way, i.e. it can e.g. be recorded after purchase of the energy entity (the solar cooker, the Compact Fluorescent Lamp CFL, the PV energy unit etc.), and sent to a registration authority which enters those ID and address data into the data processing system. During operation of the energy entities (solar cookers etc.), their usage data are detected by their monitor and, accompanied by their monitor identifier (or entity identifier), transmitted, via the transmission path, to the data processing system, which links, via matching of the received with the previously registered ID, the received energy data with the user address. In that way each user can be rewarded for using and/or producing clean energy, viz. by outputting and transferring to each user address, an amount of rewarding or credit notes in any form (e.g. in the form of carbon credits, e.g. convertible into money), reflecting the amount of energy units calculated for the relevant energy entity.

Besides the solar cooker 1a, photovoltaic energy set 1b, CFLs 1e, shown in figure 1, preferred clean energy entities may be formed by wind or hydropower driven apparatuses, biogas generators, even trees or tree plantations (the detector means could e.g. detect the size of the tree).

Finally it is noted that the energy monitors, which form an essential part of the method and system presented here, can be made as very cheap and small electronic parts, which are easily connected to or integrated into the relevant energy entities. Additional security modules, e.g. comprising data encryption features, may be added or integrated to prevent fraud.

It will be understood by those skilled in the art that the present invention is not limited to the embodiments illustrated above and that many modifications and additions may be made without departing from the scope of the invention as defined in the appending claims.

## Claims

1. Method for large scale collecting and processing energy related data of large numbers of energy producing and/or energy consuming entities, called energy entities (1) hereinafter, the method comprising the steps of:
- providing each relevant energy entity with an energy monitor (2), including detection means arranged to detect the energy production or consumption respectively of the relevant energy entity, a processing module arranged to produce data related to the produced or consumed energy respectively, called energy data hereinafter, and a transmission module arranged to transmit the energy data via a wireless transmission path (3);
- collecting said energy data from all relevant energy entities and inputting them into a data processing system (4).

2. Method according to claim 1, further comprising the steps of:
- providing each energy monitor with means for storing a monitor identifier assigned to it and for, during use, transmitting that identifier along with said energy data to the data processing system;
- providing the data processing system with all relevant monitor identifiers and energy related parameters of the relevant energy entities;
- calculating, in the data processing system, from the energy data and monitor identifiers received from the energy entities via the wireless transmission path, amounts of energy related units, called energy units hereinafter, corresponding to the energy produced or consumed by the different energy entities.

3. Method according to claim 1 or 2, further comprising the steps of:
- providing the data processing system with user or proprietor related data, called user address hereinafter, of each energy entity;
- outputting and transferring to each user address, an amount of rewarding or credit notes in any form, reflecting the amount of energy units calculated for the relevant energy entity.

4. Method according to claim 1, 2 or 3, said energy units being identical to or being related to carbon credits.

5. Method according to any preceding claim, said energy entity comprising photovoltaic means.

6. Method according to any preceding claim, said energy entity being wind driven.

7. Method according to any preceding claim, said energy entity being hydropower driven.

8. Method according to any preceding claim, said energy entity comprising a biogas generator.

9. Method according to any preceding claim, said energy entity comprising a solar cooker.

10. System arranged to perform the method according to one or more of the preceding claims.

11. System according to claim 10, the wireless transmission path comprising some form of a wireless ad hoc network (3a) on the side of the energy entities, including a so-called mobile ad hoc network, wireless mesh network or wireless sensor network, the relevant transmission modules of said energy monitors of the energy entities being arranged to function as nodes of said wireless ad hoc network.

12. System according to claim 11, said wireless ad hoc network being connected to the data processing system via a wireless or wired public communication network (3b).
